# EUROPEAN PATENT SPECIFICATION

(11) **EP 1 808 315 B1**
(45) Date of publication and mention of the grant of the patent: **05.12.2012**
(21) Application number: 05788114.6
(22) Date of filing: 03.10.2005
(51) Int. Cl.: B60C 23/04

(54) **TIRE CONDITION DETECTION DEVICE**
REIFENZUSTANDSERFASSUNGSVORRICHTUNG
DISPOSITIF DE DETECTION D' ETAT DE PNEU

(30) Priority: 04.10.2004 JP 2004290955
(43) Date of publication of application: 18.07.2007
(73) Proprietor: THE YOKOHAMA RUBBER CO., LTD., Tokyo 105-8685 (JP)
(72) Inventor: UEHARA, Tsuyoshi, The Yokohama Rubber Co., Ltd., Hiratsuka-shi, Kanagawa 2548601 (JP)
(74) Representative: HOFFMANN EITLE
(86) International application number: PCT/JP2005/018281
(87) International publication number: WO 2006/038582

(56) References cited:
- EP-A2- 1 004 461
- WO-A1-2004/036784
- WO-A1-2004/065144
- JP-A- 10 309 914
- JP-A- 50 030 568
- JP-A- 2004 070 865
- JP-A- 2005 055 319
- JP-A- 2005 138 605

## Description

### TECHNICAL FIELD

The present invention relates to tire condition detection devices. Embodiments of the invention may provide a tire condition detection device in which wiring is facilitated and failure arising from breaking of wire is improved.

### TECHNICAL BACKGROUND

In order to increase safety of vehicles, there have been conventionally proposed various devices which detect physical values showing the usage conditions of a tire such as air pressure and temperature of the tire during running (see Japanese Patent Application Kokai Publication No. 59-17127; Japanese Patent Application Kokai Publication No. 5-126666; and Japanese Patent Application Kokai Publication No. 2004-203165, for example). Such tire condition detection devices each have a sensor, transmitter, transmitting antenna, etc. which are mounted on a tire side, and a receiving antenna, receiver, display, etc. which are mounted on a vehicle body side; a signal showing a physical value such as air pressure or temperature detected by the sensor is transmitted to the vehicle body side via a radio wave to thereby enable a driver to check the tire condition during running; by finding early a decrease in tire air pressure or an increase in temperature arising from a failure within the tire, a vehicle accident due to the tire will be prevented from occurring.

Recently, tire condition detection devices such as tire air pressure detection devices that detect air pressure of a tire have been mounted on vehicles such as trucks for practical purposes on a trial basis.

In general, a very weak radio wave which does not conflict with radio wave regulations is employed for a radio wave used for communication between a tire-side transmitting antenna and a vehicle-body-side receiving antenna in order to make it possible to use it with no license or notification. The vehicle-body-side receiving antenna is placed in a tire house near the tire to effectively receive the radio wave.

On the other hand, the receiver is placed in the vicinity of a driver seat with equipment such as a display to facilitate maintenance, and wired connection is employed between the receiver and receiving antenna.

When an existing vehicle is wired, a worker stays under the vehicle and does wiring; in the cases of trucks, buses and the like in particular, wiring is very troublesome because a wiring distance from a receiving antenna placed in a tire house for a rear wheel to the receiver is long, which causes a great decrease in workability when the device is installed.

Also, because the vehicle body is long wired at its bottom part facing a road surface, damage thereto by an obstacle may cause breaking of wire or the like; measures against it are required.

Further prior art is disclosed in EP 1 004 461 A2; WO 2004/036784 A1 and WO 2004/065144 A1.

### SUMMARY OF THE INVENTION

According to the present invention, there is provided a tire condition detection device designed to be placed so that a tire condition detection signal detected on a tire side of a vehicle is received by a receiving antenna and entered into a receiver on a vehicle body side of the vehicle, the device being arranged to use a waveguide comprising a metal part of the vehicle, the receiving antenna and the receiver being electrically connected to each other via the metal part, the tire condition detection signal received by the receiving antenna being transmitted to the receiver via the metal part, wherein the metal part comprises a chassis frame of the vehicle body and the receiving antenna is designed to be placed so as to face the tire in a tire house of the vehicle.
[0009a] Embodiments of the present invention may provide a tire condition detection device in which wiring is facilitated and failure due to breaking of wire is improved.

With embodiments of the present invention, by using the metal part of the vehicle as a waveguide for transmitting the tire condition detection signal from the receiving antenna to the receiver, a wiring distance from the receiving antenna to the receiver can be shortened; therefore, wiring can be facilitated. Failures due to breaking of wire are also reduced because of the reduced wiring distance, allowing failure arising from the breaking to be improved.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a block diagram showing an embodiment of a tire condition detection device according to the present invention;
FIG. 2 is an explanatory drawing showing a state where a tire side attachment unit and a receiving antenna are placed; and
FIG. 3 is a block diagram showing another embodiment of a tire condition detection device according to the present invention.

### DETAILED DESCRIPTION

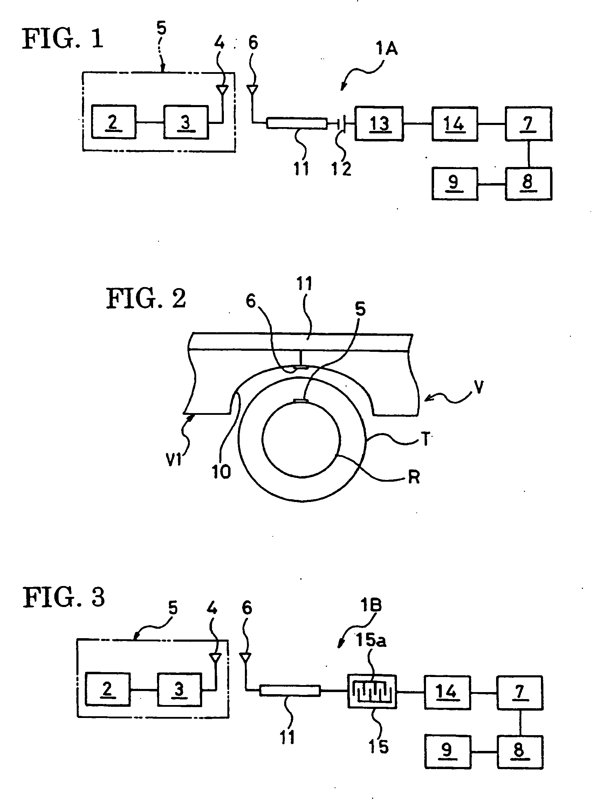

Embodiments of the present invention will be described in detail below with reference to the attached drawings.
Referring to FIG. 1, there is shown an embodiment of a tire condition detection device according to the present invention; this tire condition detection device 1A includes a pressure sensor 2 for detecting an air pressure of a tire T of a vehicle V (see FIG. 2), a transmitter 3 and transmitting antenna 4 for transmitting a signal (tire condition detection signal) of pressure detected by the pressure sensor 2, and a power source (not shown) for supplying electric power to the pressure sensor 2 and the transmitter 3. These pressure sensor 2, transmitter 3, transmitting antenna 4 and power source constitute a tire side attachment unit 5, which is designed to be mounted on a tire T side such as the outer circumferential surface of a rim R as shown in FIG. 2, or the inner surface of the tire T.

The tire condition detection device 1A further includes a receiving antenna 6 and a receiver 7 for receiving from the transmitting antenna 4 the signal of pressure of the tire T detected on the tire T side, a processor 8 that calculates a pressure value from the pressure signal input from the receiver 7, and a display 9 that displays the pressure value calculated by the processor 8; these are designed to be mounted on the vehicle body V1 side of the vehicle V.

The receiving antenna 6 is designed to be placed so as to face the tire T in a tire house 10 of the vehicle V as shown in FIG. 1 in order to effectively receive the radio wave. The receiver 7 is placed with the processor 8 and the display 9 in the vicinity of the driver seat of the vehicle V in order to facilitate maintenance of the device.

The receiving antenna 6 is electrically connected to the receiver 7 via a metal part 11 of the vehicle V; the pressure signal of the tire T received by the receiving antenna 6 is transmitted to the receiver 7 using the metal part 11 as a waveguide. Examples of the metal part 11preferably include a chassis frame of the vehicle body V1, but there is no limitation thereto.

The metal part 11 electrically connected to the receiving antenna 6 is electrically connected to the receiver 7 via filters 12 and 13 and an amplifier 14. Since a noise component mixes in the pressure signal of the tire T transmitted in the metal part 11, the filters 12 and 13 are used to remove the noise component to thereby extract the pressure signal of the tire T.

The filter 12 connected to the metal part 11, which comprises a capacitor, is arranged to remove a direct current component from the signal transmitted in the metal part 11 and to pass only an alternating current component. The filter 13 connected to the filter 12 comprises a band-pass filter that passes only the frequency band of the pressure signal received by the receiving antenna 6, and can pick up only a pressure signal from the pressure signal including the noise component. The pressure signal picked up by the filter 13 is input to the receiver 7 via the amplifier 14.

In the tire condition detection device 1A described above, a signal of pressure of the tire detected by the pressure sensor 2 is received by the receiving antenna 6 via the transmitter 3 and the transmitting antenna 4, and the received pressure signal is transmitted through the metal part 11 as a waveguide.

Only an alternating current component of the pressure signal including a noise component is then passed by the filter 12, and only the pressure signal is picked up from the alternating current component by the filter 13; the picked up pressure signal is amplified by the amplifier 14 and is put into the receiver 7. The pressure signal put into the receiver 7 is then transmitted to the processor 8, in which a value of the pressure is calculated; the pressure value is displayed by the display 9.

According to the present invention, the metal part 11 of the vehicle V such as a chassis frame is used as a waveguide for transmitting the pressure signal from the receiving antenna 6 to the receiver 7, whereby a wiring distance from the receiving antenna 6 to the receiver 7 can be shortened. Therefore, wiring can be facilitated, and failures arising from breaking of wire are reduced because of a decrease in the wiring distance, allowing failure due to the breaking to be improved.

Referring to FIG. 3, there is shown another embodiment of a tire condition detection device according to the present invention; this tire condition detection device 1B has the same arrangement as the tire condition detection device 1A of FIG. 1 except that a SAW (surface acoustic wave) filter 15 having barred-lattice-shaped electrodes 15a is used as a filter for picking up only the pressure signal of the tire T in the alternative of the filters 12 and 13.

The SAW filter 15 is connected to the metal part 11 of the vehicle V, and the receiver 7 is electrically connected to the SAW filter via the amplifier 14. The device may be arranged such that the noise component is removed from the signal transmitted through the metal part 11 to thereby pick up only the pressure signal of the tire T, using the SAW filter 15.

Examples of a device that detects air pressure of the tire T are shown in the above-described embodiments as a tire condition detection device; however, a device that detects temperature of the tire T with a temperature sensor or the like may be included in the present invention. The device of the present invention may be any tire condition detection device if the device is arranged such that a physical value showing the usage condition of a tire such as air pressure or temperature during running is detected by a sensor as a tire condition detection signal on the tire T side, and the detected signal is received by the receiving antenna 6 and input to the receiver 7 on the vehicle side.

Concerning the receiving antenna 6, if a metal part of the vehicle V is possible to be used as an antenna, the metal part may be employed as the receiving antenna 6.

The present invention is preferably employed for a tire condition detection device used for a truck, bus, etc. having a long wiring distance in particular, and more preferably applicable to a tire condition detection device having a receiving antenna to be placed in its tire house for a rear wheel.

### INDUSTRIAL APPLICABILITY

The tire condition detection device of the present invention having the aforementioned excellent effects can be very effectively utilized as a tire condition detection device to be mounted on a vehicle such as a truck, bus, etc.

## Claims

1. A tire condition detection device designed to be placed so that a tire condition detection signal detected on a tire side of a vehicle is received by a receiving antenna (6) and entered into a receiver (7) on a vehicle body side of the vehicle (V), the device being arranged to use a waveguide comprising a metal part (11) of the vehicle (V), the receiving antenna (6) and the receiver (7) being electrically connected to each other via the metal part (11), the tire condition detection signal received by the receiving antenna (6) being transmitted to the receiver (7) via the metal part (11), wherein the metal part comprises a chassis frame (11) of the vehicle body and the receiving antenna (6) is designed to be placed so as to face the tire (T) in a tire house (10) of the vehicle (V).

2. A tire condition detection device according to Claim 1, comprising a filter (12, 13; 15) for picking up the tire condition detection signal, the metal part (11) being electrically connected to the receiver (7) via the filter (12, 13).

3. A tire condition detection device according to Claim 2, wherein the filter (12) includes a capacitor connected to the metal part (11) and a band-pass filter (13) connected to the capacitor (12).

4. A tire condition detection device according to Claim 2, wherein the filter comprises a surface acoustic wave filter (15).

5. A tire condition detection device according to any one of Claims 1 to 4, having a tire side attachment unit (5) comprising a sensor (2) for detecting a physical value of the tire (T) as the tire condition detection signal, and a transmitter (3) and transmitting antenna (4) for transmitting the tire condition detection signal detected by the sensor to the vehicle body side.

## Patentansprüche

1. Zustandserfassungseinrichtung für einen Reifen, die so ausgestaltet ist, dass sie so platziert werden kann, dass ein Zustandserfassungssignal für einen Reifen auf einer Reifenseite eines Fahrzeugs durch eine Empfangsantenne (6) erfasst wird und dass es in einen Empfänger (7) an einer Fahrzeugkörperseite des Fahrzeugs (V) eingegeben wird, wobei die Einrichtung dazu angeordnet ist, einen Wellenleiter mit einem Metallteil (11) des Fahrzeugs (V) zu verwenden, wobei die Empfangsantenne (6) und der Empfänger (7) elektrisch miteinander über das Metallteil (11) verbunden sind, wobei das Zustandserfassungssignal für den Reifen, welches durch die Empfangsantenne (6) empfangen wird, zu dem Empfänger (7) über das Metallteil (11) übertragen wird, wobei das Metallteil einen Chassisrahmen (11) des Fahrzeugkörpers aufweist und die Empfangsantenne (6) dafür ausgestaltet ist, so platziert zu werden, dass sie dem Reifen (T) in einer Reifenaufnahme (10) des Fahrzeugs (V) gegenüberliegt.

2. Zustandserfassungseinrichtung für einen Reifen nach Anspruch 1, mit einem Filter (12, 13, 15) zum Auffangen des Zustandserfassungssignals für den Reifen, wobei das Metallteil (11) elektrisch mit dem Empfänger (7) über den Filter (12, 13) verbunden ist.

3. Zustandserfassungseinrichtung für einen Reifen nach Anspruch 2, bei welcher der Filter (12) einen Kondensator, der mit dem Metallteil (11) verbunden ist, und einen Bandpassfilter (13) aufweist, der mit dem Kondensator (12) verbunden ist.

4. Zustandserfassungseinrichtung für einen Reifen nach Anspruch 2, bei welcher der Filter einen Filter für akustische Oberflächenwellen (15) aufweist.

5. Zustandserfassungseinrichtung für einen Reifen nach einem der Ansprüche 1 bis 4 mit einer Reifenseiten-Anbringeinheit (5) mit einem Sensor (2) zum Erfassen eines physikalischen Werts des Reifens (T) als das Zustandserfassungssignal für den Reifen und mit einem Sender (3) und mit einer Sendeantenne (4) zum Senden des Zustandserfassungssignals für den Reifen, welches von dem Sensor erfasst wurde, zu der Fahrzeugkörperseite hin.

## Revendications

1. Dispositif de détection de l'état d'un pneu conçu pour être placé de façon qu'un signal de détection de l'état du pneu détecté sur un côté du pneu d'un véhicule soit reçu par une antenne de réception (6) et soit entré dans le récepteur (7) sur le côté de la caisse du véhicule (V), le dispositif étant agencé pour utiliser un guide d'ondes comprenant une partie métallique (11) du véhicule (V), l'antenne de réception (6) et le récepteur (7) étant électriquement connectés l'un à l'autre par une partie métallique (11), le signal de détection de l'état du pneu reçu par l'antenne de réception (6) étant transmis au récepteur (7) par la partie métallique (11), où la partie métallique comprend un châssis (11) de la caisse de véhicule, et l'antenne de réception (6) est conçue pour être placée de manière à faire face au pneu (T) dans un logement de pneu (10) du véhicule (V).

2. Dispositif de détection de l'état d'un pneu selon la revendication 1, comprenant un filtre (12, 13; 15) pour capter le signal de détection de l'état du pneu, la partie métallique (11) étant électriquement connectée au récepteur (7) par le filtre (12, 13).

3. Dispositif de détection de l'état d'un pneu selon la revendication 2, où le filtre (12) comprend un condensateur connecté à la partie métallique (11) et un filtre passe-bande (13) connecté au condensateur (12).

4. Dispositif de détection de l'état d'un pneu selon la revendication 2, où le filtre comprend un filtre d'ondes acoustiques de surface (15).

5. Dispositif de détection de l'état d'un pneu selon l'une quelconque des revendications 1 à 4, comportant une unité de fixation côté pneu (5) comprenant un capteur (2) pour détecter une valeur physique du pneu (T) comme signal de détection de l'état du pneu, et un transmetteur (3) et une antenne de transmission (4) pour transmettre le signal de détection de l'état du pneu détecté par le capteur au côté de la caisse de véhicule.
